# EUROPEAN PATENT SPECIFICATION

(11) **EP 1 384 602 B1**
(45) Date of publication and mention of the grant of the patent: **07.06.2006**
(21) Application number: 03102181.9
(22) Date of filing: 16.07.2003
(51) Int. Cl.: B60C 23/04

(54) **Tire tag housing and assembly method for annular apparatus**
Gehäuse für ein Reifen-Etikette und Montagemethode für eine ringförmige Vorrichtung
Boîtier pour une étiquette de pneumatique et méthode d'assamblage pour un dispositif annulaire

(30) Priority: 24.07.2002 US 398065
(43) Date of publication of application: 28.01.2004
(73) Proprietor: THE GOODYEAR TIRE & RUBBER COMPANY, Akron, Ohio 44316-0001 (US)
(72) Inventor: Benedict, Robert Leon, Tallmadge, OH 44278 (US); Hillenmayer, Franz Josef, 93133 Burglengenfeld (DE); Lettieri, Joseph Carmine, Stow, OH 44224 (US); Shepler, Peter Ross, Stow, OH 44224 (US)
(74) Representative: Kutsch, Bernd

(56) References cited:
- EP-A- 1 024 034
- EP-A- 1 310 386
- WO-A-99/29525
- US-A- 5 119 066
- US-B1- 6 357 833
- US-B1- 6 386 254

## Description

### Field of the Invention

The invention relates generally to annular apparatus for use in tire monitoring systems and, more specifically, to a tag housing and assembly method for such annular apparatus.

### Background of the Invention

This invention relates to an annular apparatus, including an antenna for electronically transmitting tire or wheel identification or other data at radio frequency. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data. Such an apparatus is disclosed in WO9929525. The subject invention is specifically directed to an assembly method and tag housing for annular apparatus used in tire monitoring systems.

As is evidenced by the references described below, it is known in the art to employ an annular antenna to transmit, at radio frequencies, data from a transponder contained within the structure of a tire or tire and wheel assembly. In practice, however, it is very difficult to do this with an antenna incorporated into the tire during the course of its manufacture. Both radial ply and bias ply tires undergo a substantial diametric enlargement during the course of manufacture. Bias ply tires are expanded diametrically when inserted into a curing press, which typically has a bladder that forces the green tire into the toroidal shape of the mold enclosing it. Radial ply tires undergo diametric expansion during the tire building or shaping process and a further diametric expansion during the course of curing. Any annular antenna and the electronic circuitry associated therewith built into the tire must be able to maintain structural integrity during the diametric enlargement of the tire during its manufacture. Furthermore, the annular antenna must be able to survive the repeated deformations occurring during tire use and the rigors imparted by testing procedures to which tires are subjected before retreading. Accordingly, a need exists for an annular apparatus and method sufficient to maintain mechanical and structural integrity in the transponder-antenna loop connection during the diametric enlargement of the tire during the building and curing process. In addition, the antenna and the transponder-antenna loop connection must be durable and able to maintain structural integrity throughout the rigors of tire operation and retreading procedures without degradation in performance or malfunction due to breakage of wire or electrical connections.

A magnetic coupling between an antenna and a transponder in an annular assembly is typically effected by means of a toroidal transformer. The antenna is coupled to the transformer by means of a primary winding and the transponder by means of a secondary winding. The mechanical connections of the antenna and transponder to the transformer, however, are subject to failure due to stresses generated in the tire during manufacture or subsequent use. It has been proposed to employ a toroidal transformer body in which the antenna and the transformer are directly coupled by the passage of the antenna directly through the toroid opening. Electrical coupling occurs between the loop and the toroid, and therefore into the secondary winding because the current induced in the loop antenna from the transceiver magnetic field creates a magnetic near the loop. The magnetic field is induced directly into the toroid that closely surrounds the antenna loop wire(s). Such a relationship between the antenna and toroid avoids the problems attendant the prior art that utilize a fixed connection or winding between the antenna and transformer.

It has further been proposed to encapsulate the antenna, transformer, and transponder within an annular strip or ring formed of electrically insulating, elastomeric material. The system components are positioned within a mold and the carrier strip material is induced into the mold and surrounds the components. A unitary annular system is thereby created allowing for convenient integration of the system to a tire by adhesive in a post tire build operation. Encapsulating an antenna, toroidal transformer, and transponder in a carrier strip in order to create the unitary ring assembly, however, carries certain challenges and risks. The relative positions of the antenna, transformer, and transducer must be maintained. Moreover, the integrity of the connections between the associated components must be maintained. In addition, the sensors and communication electronics of the transponder must be protected from damage or contamination due to exposure to the introduction of the carrier strip material.

Accordingly, there is needed a tag housing and assembly method for an annular apparatus including a transponder, transformer, and antenna that facilitates the integration and assembly of the annular apparatus into a carrier strip. The tag housing must serve to maintain the relative orientation of the transponder, transformer, and antenna during their incorporation into a carrier strip or ring; preserve the integrity of the connections between the associated components; and protect the components from damage or contamination from the carrier strip material molded therearound. Moreover, a satisfactory tag housing and assembly method will be economical to fabricate, implement, and deploy and facilitate efficient performance of the transformer, transponder, and antenna in monitoring the condition of a tire.

Document EP 1024034 discloses a housing which is considered the closest prior art and comprises opposed sidewalls and a bottom wall defined an internal chamber therebetween. The housing further discloses a portal extending through the upper surface of the housing.

### Summary of the Invention

The subject invention satisfies the need for a tag housing and assembly method for annular apparatus for tire monitoring systems. The tag housing includes a base component having an elongate configuration comprising spaced apart sidewalls, a bottom wall, and end walls that define an internal compartment therebetween. A through bore extends through the end walls and creates with the internal compartment a through passageway through the housing base. A toroidal transformer, in one embodiment, having a through bore is positioned within the housing base component so that the transformer through bore axially aligns with the through bore of the base housing component. A transponder circuit board including sensors and associated electronics is mounted within the internal compartment of the housing base component above the transformer and an electrical coupling is established between the transponder and the transformer. A cap component is provided to enclose the housing and seals against an upper surface of the base component. The cap is generally pyramidal having a lower rim flange, vertical sidewall portions that intersect the rim flange, and upper sidewall portions that taper inward to a flat top surface. The tapered upper portion of the cap defines, generally, the housing "snout". An aperture or portal is disposed to extend through a median portion of the top surface. The vertical sidewall portions and an upper ledge surface of the rim flange intersect at a substantially right angle.

A coupling of the antenna loop is effected in a coupling with the transformer toroid, preferably, but not necessarily, by passing the antenna loop through the housing through bore to electro-magnetically couple the antenna to the transformer.

The inward taper and stepped profile of the tag housing facilitates a self centering registry of the housing within a mold cavity. The upper ledge surface of the rim flange and the vertical sidewall portions abut against sidewall portions defining the mold cavity to center and isolate the housing snout in a protected region of the mold cavity. The mold is closed and carrier strip material is induced into the mold surrounding a lower portion of the housing and the annular antenna. Pressure from the induced material serves to influence the housing cap into the mold block cavity and further enhances the seal between abutting surfaces of the cap the mold block. The mold block cavity surrounding the port within the upper surface of the cap is thereby maintained in a material free state any entry of carrier strip material through the tag housing port that would otherwise contaminate or damage transponder sensors or electronics is avoided.

In the finished form, the carrier strip, antenna, and tag housing represent a unitary ring assembly that is readily transported, inventoried, handled, and affixed to a tire sidewall by suitable adhesives. The snout of the tag housing extends free of the carrier strip and is positioned by the carrier strip in an exposed relationship with the tire cavity. Consequently, with the annular apparatus attached to a tire liner, the transponder sensors within the housing are in direct communication with the tire cavity through the housing port and a positive and accurate reading of monitored tire cavity parameters is facilitated.

According to another aspect of the invention, the tag housing is elongate and is partially embedded within the carrier strip in either an "on end" or a "flat" orientation. In the "on end" orientation the tag housing snout projects a relatively greater distance into the tire cavity, but the reduced attachment length along the sidewall radial direction reduces the effect of the rigid tag on tire sidewall bending. In the "flat" orientation, the mounted transponder housing assumes a lower profile and the bending influence of centrifugal force on the tag housing from operation of the tire is reduced.

These and other aspects of the invention, which will be apparent to those skilled in the art, are achieved by preferred and alternative embodiments that are described in detail below and illustrated by the accompanying drawings.

### Brief Description of the Drawings

Fig. 1 is a perspective view of a tire and the subject annular apparatus with portions of the tire removed for the purpose of illustration.
Fig. 2 is a sectional schematic of a tire mounted to a rim and illustrating alternative locations in which to mount the subject annular apparatus.
Fig. 3 is an enlarged perspective view of a tire portion having a transponder and antenna assembly positioned against a tire sidewall surface.
Fig. 4 is a sectional schematic view of a tire and wheel assembly mounted to a vehicle frame.
Fig. 5 is an enlarged perspective view of the subject antenna projecting through a transponder module.
Fig. 6 is an enlarged perspective view of a portion of the subject annular assembly.
Fig. 7 is a front perspective view of the subject transponder module.
Fig. 8 is an exploded perspective view thereof.
Fig. 9 is a top plan view thereof.
Fig. 10 is a longitudinal section view through the transponder module of Fig. 9 taken along the line 10-10.
Fig. 11 is a transverse section view through the transponder module of Fig. 9 taken along the line 11-11.
Fig. 12 is a perspective view of the module circuit board.
Fig. 13 is a perspective view of the receiver module.
Fig. 14 is a block diagram of the car transceiver and tire monitoring system.

### Definitions

"Axial" and "axially" means the lines or directions that are parallel to the axis of rotation of the tire.

"Bead" or "bead core" generally means that part of the tire comprising an annular tensile member of radially inner beads that are associated with holding the tire to the rim; the beads being wrapped by ply cords and shaped, with or without other reinforcement elements.

"Circumferential" most often means circular lines or directions extending along the perimeter of the surface of the annular tread perpendicular to the axial directs; it can also refer to the direction of the sets of adjacent circular curves whose radii define the axial curvature of the tread, as viewed in cross section.

"Inner" means toward the inside of the tire and "outer" means toward its exterior.

"Lateral" means in a direction parallel to the axial direction.

"Radial" and "radially" mean directions radially toward or away from the axis of rotation of the tire.

"Shoulder" means the upper portion of sidewall just below the tread edge.

"Sidewall" means that portion of tire between the tread and the bead.

### Detailed Description of the Preferred Embodiments

As used herein, a "transponder" is an electronic apparatus (device) capable of monitoring a condition such as air pressure within a pneumatic tire, and then transmitting that information to an external device. The external device can be either an RF (radio frequency) reader/interrogator or, simply an RF receiver. A simple receiver can be used when the transponder is "active", and has its own power source. A reader/interrogator would be used when the transponder is "passive" and is powered by an RF signal from the reader/interrogator. In either case, in conjunction with the external device, the transponder forms a component of an overall tire-condition monitoring/warning system. A toroidal body composed of a material of high electro-magnetic permeability is coupled to the transponder by a winding. In conventional systems, the antenna is coupled to the toroidal body by means of a primary winding and the transponder is coupled to the toroidal body by means of a secondary winding. As explained below, the primary winding is eliminated in the preferred embodiment. The "secondary" winding that couples a transponder to the toroidal body hence is referred to herein as merely the "winding". For the purpose of the subject disclosure and the invention, the annular system is not transponder specific. That is, a wide range of commonly available transponders, sensors, and associated electronics may be packaged and utilized with the subject invention.

As used herein, a "toroid" is a body formed from material having a high elector-magnetic permeability by a continuous curved surface and includes a central through bore. The toroidal body may be cylindrical, oblong, symmetrical, or asymmetrical without departing from the invention herein set forth.

In order to send or receive RF signals, a transponder must have an antenna. The antenna is annular in configuration in the subject invention and may either be incorporated into the tire during manufacture or affixed to the tire by way of a post manufacture procedure. As used herein, an "annular antenna" may be circular, oblong, symmetrical, or asymmetrical without departing from the subject inventive principles. However, the preferred configuration of the antenna is circular and sized to overlap the tire sidewall region to which it attaches. The antenna may comprise a single wire or a plurality of strands. Various commercially available transponders, sensors, and other electrical devices deployed in combination with an annular antenna formed from conventional conductive materials are suitable for use in conformance with the principles of the subject invention.

Acceptable materials for the antenna wire include steel, aluminum, copper or other electrically conducting wire. As disclosed in this patent document, the wire diameter is not generally considered critical for operation as an antenna for a transponder. For durability, stranded steel wire consisting of multiple strands of fine wire is preferred. Other wire options available include ribbon cable, flexible circuits, conductive film, conductive rubber, etc.

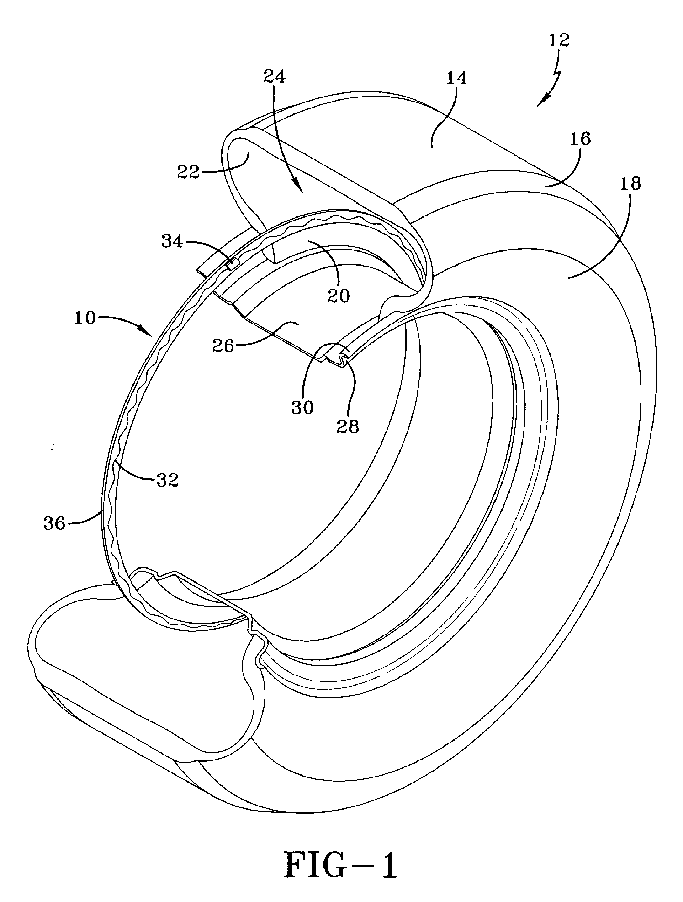

Referring initially to Fig. 1, a preferred embodiment of an annular assembly 10 is shown deployed within a tire 12. The tire 12 is formed from conventional materials such as rubber or rubber composites by conventional means and may comprise a radial ply or bias ply configuration. A typical tire 12 is configured having a tread 14, a shoulder 16, an annular sidewall 18, and a terminal bead 20. An inner liner 22 is formed and defines a tire cavity 24. The tire 12 is intended for mounted location upon an annular rim 26 having a peripheral rim flange and an outer rim flange surface 30. Rim 26 is conventionally configured and composed of a suitably strong metal such as steel.

An annular antenna 32 is provided and, in the preferred embodiment, embodies a sinusoidal configuration. Antenna 32 may be alternatively configured into alternative patterns or comprise a straight wire(s) if desired and may be filament wire, or cord or stranded wire. Acceptable materials for the wire include steel, aluminum, copper or other electrically conducting wire. As mentioned previously, the wire diameter is not generally considered critical for operation as an antenna and multiple strands of fine wire is preferred. The curvilinear form of antenna 32 provides flexibility and minimizes the risk of breakage during manufacture and use explained below.

With continued reference to Fig. 1, a transponder module 34 of the general type described above is provided and may include means for sensing tire parameters such as pressure and temperature. Included as part of the apparatus is a carrier strip 36 of material formed into the annular ring configuration shown. Carrier strip 36 is formed of electrically insulating, preferably semi-rigid elastomeric material common to industry such as rubber or plastic. The strip 36 is formed to substantially encapsulate the antenna wire(s) 32 and at least a portion of the transponder module 34 in the manner described below. In the post manufacturing state, therefore, the apparatus comprising antenna 32, transponder module 34, and carrier strip 36, in a unitary, generally circular, semi-rigid assembly that is readily transportable and handled for attachment to tire 12. The diameter of the apparatus assembly is a function of the size of the tire 12 and the preferred attachment location thereon.

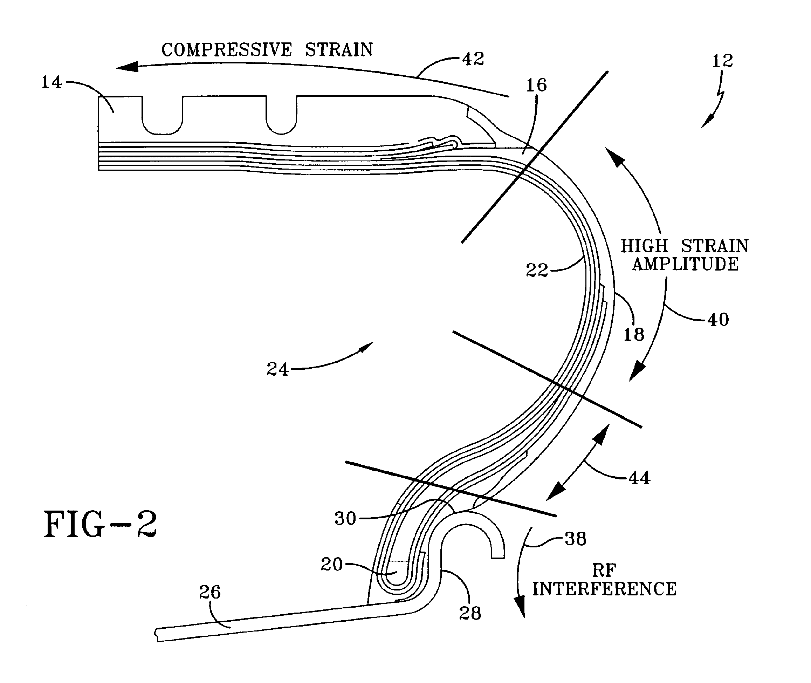

Fig. 2 illustrates a preferred location for annular apparatus 10 on a tire 12 in accordance with the present invention. The tire 12 is mounted to a rim 26 in conventional fashion. The bead 20 of tire 12 is disposed within the rim 26 against flange 28. Upper surface 30 of the flange 28 is located above a lower edge of the tire bead 20. As will be appreciated, the flange 28 shields the lower portion of the tire 12 comprising bead 20 and defines an "RF INTERFERENCE" region 38 of the tire. A region 40 of tire 12 above region 38 at the sidewall 18 is further defined as a "HIGH STRAIN AMPLITUDE" region. As sidewall 18 flexes during operation of the tire on a vehicle, region 40 experiences a high level of strain. The region 42 located at the tread portion of the tire is referred to herein for explanatory purposes as a "COMPRESSIVE STRAIN" region. It is at region 42 that the tire 12 experiences a high level of compressive strain as the tire is operatively utilized.

In combined reference to Figs. 1 and 2, the apparatus 10 is affixed to liner 22 of the tire 12 either during manufacture of the tire or, as preferable, in a post-manufacture assembly operation. Attachment may be by means of an adhesive or the apparatus 10 may be embedded into the tire 12 itself during manufacture. Adhesives commonly utilized in the industry for tire patch and repair may be employed. The location on the tire 12 to which apparatus 10 is attached pursuant to the instant invention is region 44 in Fig. 2, located between the RF INTERFERENCE region 38 and the HIGH STRAIN AMPLITUDE region 40. It will be appreciated that region 38 would be equitable from a mechanical perspective since tire region 38 is relatively rigid, protected by rim flange 28, and, experiences a relatively low strain level during operation of the tire. From an electrical perspective, however, region 38 of the tire 12, shielded by rim flange 28, is ill suited as a location for the transponder 34.

Location of the apparatus 10 within region 40 of the tire sidewall 18 is an option. Such a location would avoid the RF Interference caused by the rim 26. However, the tire sidewall 18 experiences high levels of strain during operation of the tire 12. Consequent damage to or breakage of components affixed to the sidewall 18 may occur. Similarly, location of the apparatus 10 at the tread region 42 of tire 12 would avoid RF Interference from the rim 26 but the tread region experiences high compression strain during operation of the tire 12. Location of tire monitoring system devices in such a location would be therefore be undesirable from a mechanical perspective.

Consequently, apparatus 10 is preferably located within region 44 of the tire 12. Region 44 is generally an annular region located substantially between 10 to 30 millimeters above the upper surface 30 of the rim flange 28 when tire 12 is mounted to rim 26. Within region 44, the apparatus is free from RF Interference from the flange 28 of rim 26. Region 44 is further a relatively low strain amplitude region of the tire 12. Thus, region 44 of the tire 12 represents an optimal location for apparatus 10 that balances the need for minimal RF Interference from the rim 26 while mechanically protecting the apparatus 10 from damage due to strain forces introduced into the tire 12 during its operation.

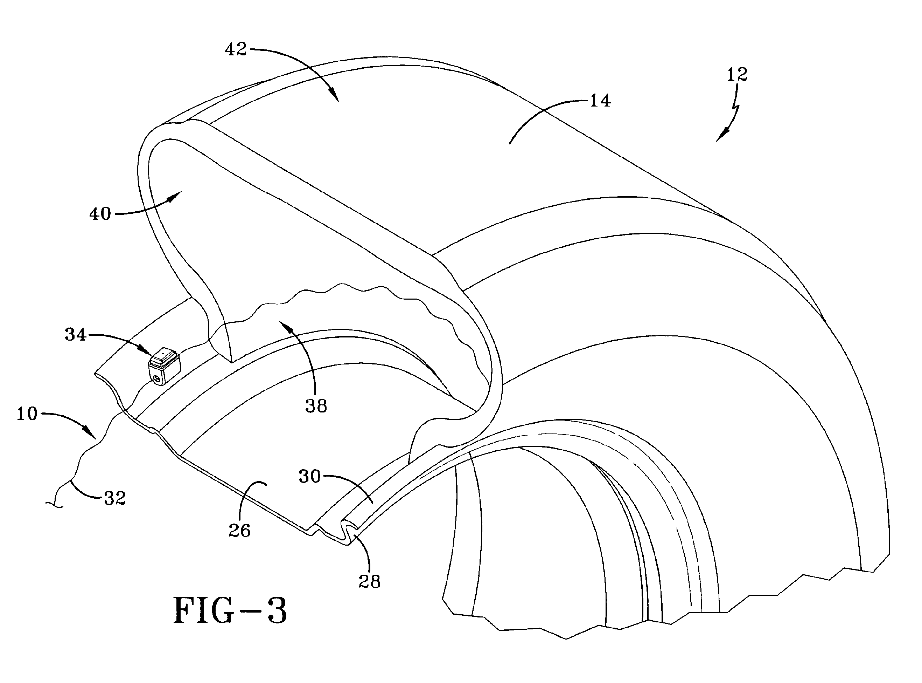

Fig. 3 illustrates an alternative embodiment of the subject apparatus 10 in which the carrier strip 36 is eliminated and the antenna 32 and transponder 34 are embedded directly within the tire 12 during its manufacture. The location of the antenna 32, again, is within region 44 described as optimal in the preceding paragraph; that is, approximately 10-30 millimeters above the rim flange surface 30 when tire 12 is mounted to rim 26. Attaching the apparatus 10 into tire 12 during its manufacture is possible pursuant to the invention but is not preferred since such a procedure would necessarily expose the transponder 34 and antenna 32 to potentially damaging forces as the tire 12 is formed. Also, implanting an exposed annular antenna 32 and transducer 34 makes replacement and repair of the assembly in the event of damage or breakage problematic. Consequently, it is preferable to attach the apparatus 10 to the tire 12 in a post manufacture process by adhesives or the like. The advantages of post manufacture assembly is that the apparatus 10 is spared the stress of the tire manufacturing process and the apparatus 10 may readily be removed and replaced in the event of breakage. Moreover, the unitary apparatus 10 shown in Fig. 1 may readily be retrofitted by adhesive to pre-manufactured or used tires. Finally, the annular apparatus is a unitary assembly and may be conveniently inventoried in a range of diametric sizes so as to fit various sized pre-manufactured tires.

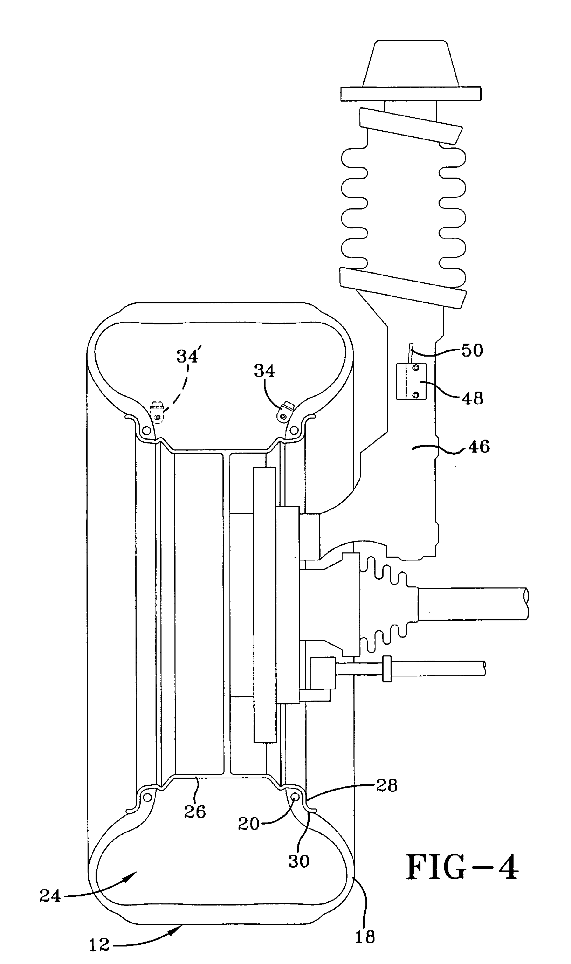

Fig. 4 shows the transponder module 34 located at its preferred location on a tire 12 and exposed to the tire cavity 24. The transponder may include pressure and temperature sensors for monitoring the status of the cavity 24 and communicate such information to a remote transceiver 48 mounted to the vehicle frame 46. The transceiver 48 is positioned opposite the antenna of the apparatus 10 and is in continuous communication therewith throughout the 360 degrees rotation of the tire 12. Transceiver 48 is of a type commercially available in the industry and is electrically connected by lead 50 to conventional logic, processing and display electronics of the vehicle (not shown). As described previously, the position of the transponder module 34 is above the rim flange 28 so that RF communication between the transponder 34 and the transceiver 48 is not impaired.

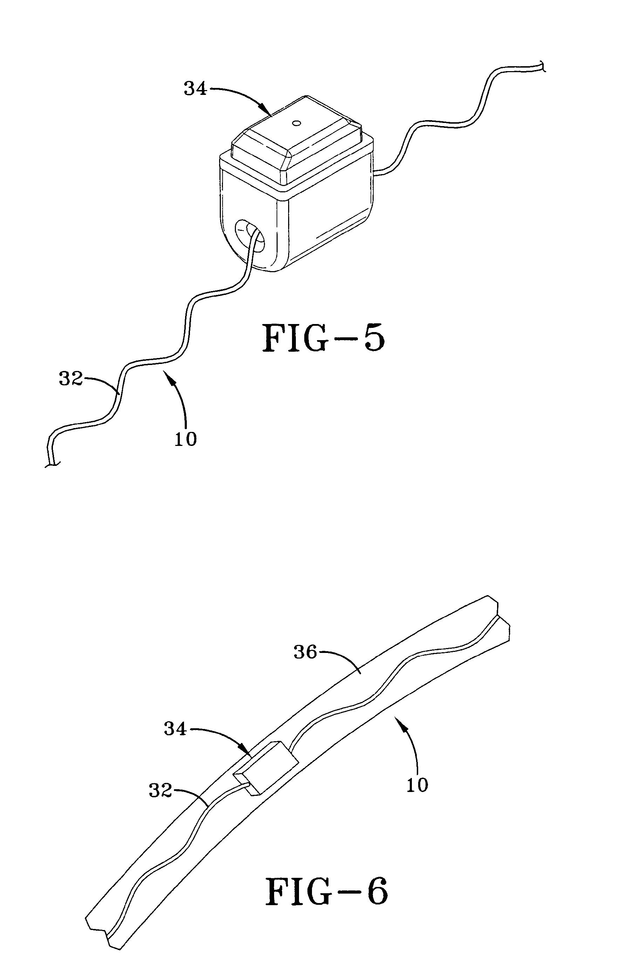

With collective reference to Figs. 5-12, the configuration of the annular apparatus 10 will be explained in greater detail. The transponder module 34 generally comprises a tag base housing 52 formed of rubber or plastic material by conventional means. The housing 52 includes opposite sidewalls 54, 56 joining along a radiused bottom surface 55 to opposite vertical end walls 58, 60. The walls 54, 55, 56, 58, and 60 define a central compartment 62. A through bore 64 extends through lower portion of the end walls 58, 60 in communication with the compartment 62.

The housing 52 further includes a cap member 68 likewise formed of conventional rubber or plastic material by conventional means such as induction molding. The cap member 68 includes an inward tapered upper protrusion or "snout" 70. A flange 78 peripherally defines a lower boundary of cap 68 and provides a horizontal ledge surface 80. Vertical sidewalls of cap 68 extend from the ledge surface 80 at substantially a right angle and adjoin upper cap surfaces 81 that taper inward to a flat top surface 74. A central sensor port 76 is disposed to project through the top surface 74 and communicate with the housing compartment 62. An underside of the flange 78 is dimensioned to rest upon the upper surface of the module base housing 52 and the juncture may be sealed by common sealants to create a unitary housing comprising the base 52 and the cap 68.

The housing comprising the preferred embodiment of the subject invention is thus quadrilateral and symmetric, elongate in a longitudinal direction, and configured having an inwardly stepped profile at an upper end. While preferred, other shapes and configurations may be substituted and utilized for the housing while not departing from the invention. By way of example, without any limitation intended, the tag housing may be cylindrical having arcuate sidewalls stepped inward at the top or be asymmetrically configured to accommodate the configuration of the circuit board, transponder sensors, and/or electronics if desired or required.

In the illustrated embodiment, the transponder module 34 further includes a toroidal body (toroid) 82 composed of a material, such as a ferrite, having a high electro-magnetic permeability. The body 82 generally comprises a cylinder having an elliptical cross-sectional configuration. The elliptical sectional configuration of body 82 serves to reduce its vertical dimension and allows for a more compact packaging of the body 82 within the transponder module. The body 82 includes a winding 84, as shown, terminated to conductor leads 86. A central through bore 88 projects through the body 82 in an axial or longitudinal direction.

A protective sleeve member 90 is further provided sized for receipt and residence with the bore 88 of body 82. The sleeve 90 comprises generally an elongate cylinder having an elliptical cross-section. The sleeve 90 further includes a circumferential sidewall 92 and an axial or longitudinal through bore 94. Bore 94 is offset relative to the longitudinal axis of the sleeve 90 so as to create a wall 95 of increased thickness at an outward side of the sleeve 90. An outwardly open longitudinal channel 96 is formed within the wall 95 as shown. The sleeve 90 is closely received within bore 88 of body 82 and winding 84 is received within the channel 96 of sleeve 90.

With continued reference to Figs. 5-12, a circuit board 98 mounts within the central compartment 62 of the transponder base housing 52. Circuit board 98 is typically configured to comprise an electronic package 100 mounted to an upper surface 102 and may include an electronic package 106 mounted to an underside 104. The electronic packages 100, 106 are generically depicted in Figs. 5-12 and include the transponder sensors, logic, and RF transmitting systems necessary to perform tire cavity monitoring activity. The subject invention is not transponder design specific and any one of multiple conventional transponder systems may be utilized and mounted to one or both surfaces 100, 104 of circuit board 98. The board 98 further includes lead receiving channels 108 fabricated within a board side.

Assembly of the transponder module proceeds generally as follows. The sleeve 90 is inserted within the through bore 88 of the toroidal body 82 which is then inserted into the chamber 62 of the housing base 52. Situated within chamber 62, the through bore 94 of sleeve 90 and the bore 99 of body 82 coaxially align with housing through bore 64. The winding 84 of body 82 is received within channel 96 of the sleeve 90 and leads 86 are routed upward. The number of turns in winding 84 is designed to impedance match the transponder electronics in a conventional manner. The board 98 mounts horizontally in the preferred embodiment within the housing 52 above the sleeve 90 and the toroidal body 82 through passage. Leads 86 from the winding 84 are routed into the channels 108 and electrically connect to the electronics 100, 106 on circuit board 98. The peripheral flange 78 of the cap member 68 is thereafter positioned upon the upper surface 66 of the housing 52 and the interface is sealed by application of a suitable adhesive.

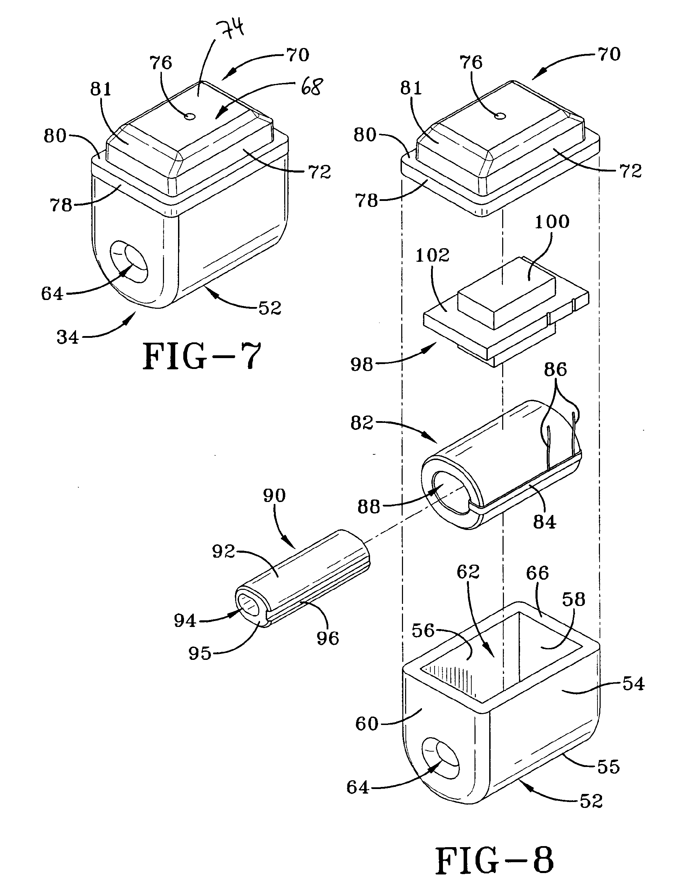

In the assembled condition, the transponder module 34 is as shown in Fig. 7. The transponder module housing, internal assembly, and component orientation may be varied if desired in the practice of the invention. The transponder module 34 thus comprises a sealed self contained unit that includes circuit board and transponder electronics for monitoring parameters of a tire cavity such as pressure and temperature. The electronics of the transponder module 34 may further include tire identification information. The toroidal body 82 is electro-magnetically and mechanically coupled to the transponder package 24 via winding 84.

The antenna 32 is routed through the transponder module 34 as seen best from Fig. 5 and comprises a continuous loop. The antenna 32 in the preferred embodiment is formed into a sinusoidal configuration; the sinusoidal shape serving to provide antenna elongation capacity with which to counter strain forces in the tire from its operation. The antenna 32 projects through bore 94 of sleeve 90, the bore 88 of body 82, and the through bore 64 of housing 52 in non-contacting manner. The antenna 32 is thus electro-magnetically coupled while mechanically decoupled from the transponder module 34. It will be noted that the toroidal body 82 functions as a transformer in which the primary winding is eliminated. The antenna loop 32 is passed directly through the through bore 88 of the toroid 82 and couples magnetically with the body absent a primary winding. Electrical coupling occurs between the loop 32 and the toroidal body 82, and therefore into the winding 84 because the current induced in the loop antenna 32 from the transceiver 48 magnetic field creates a magnetic near the loop. The magnetic field is induced directly into the toroidal body 82 that closely surrounds the antenna loop wire(s) 32.

Such a coupling, designated herein as Direct Magnetic Coupling (DMC), affords several distinct advantages. The DMC approach allows the antenna loop to pass through the transponder package without a mechanical connection and therefore eliminates the problems with making and maintaining a connection between the loop wire and the transponder package discussed previously. The winding 84 turn ratio may be varied to accommodate optimum impedance matching. Secondly, the DMC technique provides a high energy coupling. Furthermore, the process of attaching the antenna loop to a transponder is simplified rendering the remote coupling between wire bundles or cables and transponders substantially less difficult. Moreover, the magnetic coupling between annular antenna and transponder using the DMC technique is maintained in a continuous 360 degree read and dead zones in the interrogation area are avoided. While a direct magnetic coupling between the antenna and the transformer is preferred in the embodiment shown, a direct coupling is not mandatory to the practice of the subject invention. A winding or other known technique may be utilized to couple the antenna to the transformer if desired.

The assembly of Fig. 5 may be embedded into a tire during its manufacture, resulting in the tire assembly shown in Fig. 3, although it is not preferable to do so. Incorporation of the annular apparatus during tire build imposes substantial strain into the tire monitoring components and may result in component breakage. In a post cure state, removal of an annular assembly or any component therein may be difficult or impossible. Consequently, it is preferred that the subject annular assembly be affixed to a tire as a post tire build operation.

To do so, the antenna 32 and transponder module sub-assembly are first embedded within a rigid or semi-rigid carrier strip 36 shown in FIGS. 1 and 6. The strip 36 is formed from a non-conductive encapsulant material such as rubber or plastic and an annular assembly results that is unitary and readily transported, stored, and handled. Creation of a unitary combination of antenna, transponder, and carrier strip facilitates ease of incorporation of the annular assembly into a tire in a post build procedure. The assembly is positioned against the tire liner 22 at a location within the optimum region 44 discussed previously. The strip 36 is adhered to the tire by application of commonly available adhesives. Should the antenna transponder module break in transit or malfunction, the assembly 10 may be removed and replaced without damaging the tire. Moreover, the encapsulant material further serves to maintain the antenna and the toroidal body in their intended mutual orientation.

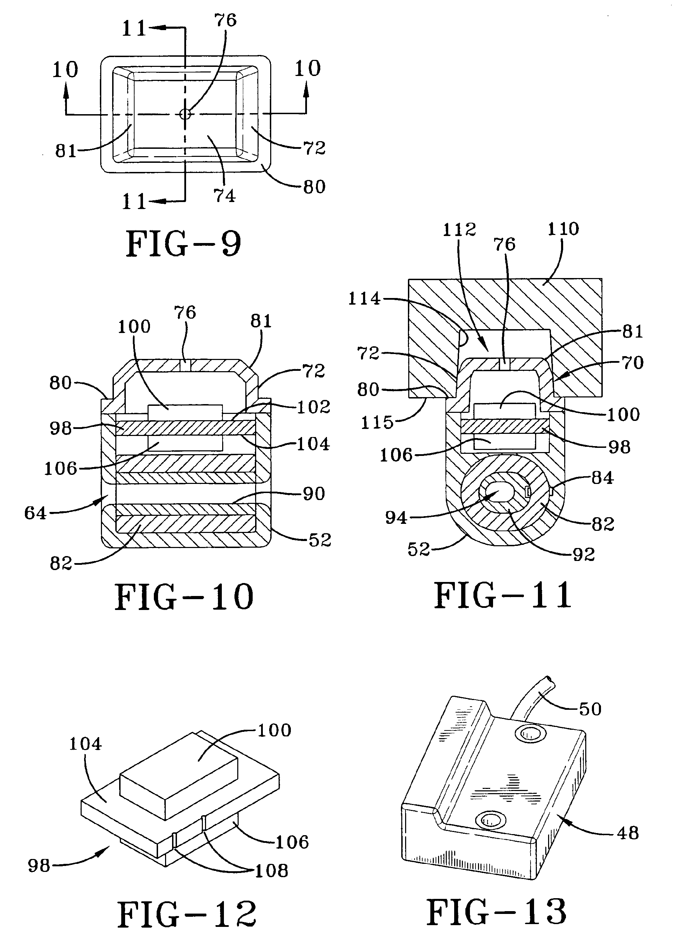

In order to facilitate the ready incorporation of the transponder module 34 into the carrier strip 36, the housing of the transponder 34 comprising cap 68 and base housing 52 are of a unique stepped and tapered configuration. The cap comprises the tapered snout 70 at an upper end defined by inward tapering surfaces 81. The cap 68 steps outward at the lower peripheral edge flange 78. As best viewed from Figs. 7 and 11, the housing snout 70 is received within a cavity 112 within a mold block 110. The tapered profile renders the transponder housing self registering and centers the housing within cavity 112 prior to introduction of the carrier strip material. In the centered position, sidewalls 114 of the mold block 110 closely abut against cap surfaces 72 and lower surfaces 115 of block 110 abut the upper surface 80 of cap flange 78 to isolate and protect the snout 70 of cap 68 within the mold cavity 112. The serpentine route created between the abutting surfaces of the housing and the mold block inhibits the progress of induced carrier strip material into the cavity, down the sensor port 76, and into the housing compartment 62. A bottom half of the mold block (not shown in Fig. 11) closes against the lower surfaces 115 of block 110 and material to form the carrier strip 36 is introduced into the mold cavity. Abutting surfaces 114, 115 and cap surfaces 72, 80 prevent the carrier material from entering cavity 112 and thereupon invading the transponder aperture 76. Material forming the carrier strip 36, in the shown embodiment, is filled up to the surface 80 of the flange 78, entirely encapsulating the antenna 32 and partially encapsulating the base 52 of the transponder module 34. The degree to which the housing and antenna are encapsulated into the carrier strip 36, however, may be varied if required or desired.

The mold halves are separated and the annular carrier strip with integrally captured antenna and transponder package removed from the mold. The subject annular assembly is thereafter affixed to the inner liner 22 of the tire 12 in the manner described previously and shown in Figs. 1 and 6. The transponder module 34 may be oriented flat against the carrier strip as shown in Fig. 3 or oriented on end as shown in broken line at 34'. Whichever orientation is utilized, the strip material 36 serves to maintain the transponder and antenna in a preferred optimal mutual orientation and the transponder module 34 in an optimal orientation relative to the tire cavity. The port 76 in the upper surface 74 of the cap 68 is maintained open and exposed to the tire cavity 24 and projects free of the carrier strip 36. Direct communication between the tire cavity 24 and sensors mounted to the circuit board 98 is thereby facilitated through port 76. The stepped and tapered configuration of the transponder module 34 is preferred in order to make the module self centering in the mold and to allow a seal to be established between the mold and outer surfaces of the transponder module. The annular path defined between ledge surface 80 and vertical surface, sidewalls 72 of cap 68 and the inward facing surfaces of mold sidewalls 114 deters the flow of carrier material into cavity 112. Were the flow of material so not inhibited, the material could enter cavity 112 and proceed through port 76 to the circuit board 90. The electronics and sensors mounted upon circuit board 98 are thus protected during the process of molding carrier strip 36 around the transponder module base 52 by the stepped configuration of the transponder housing.

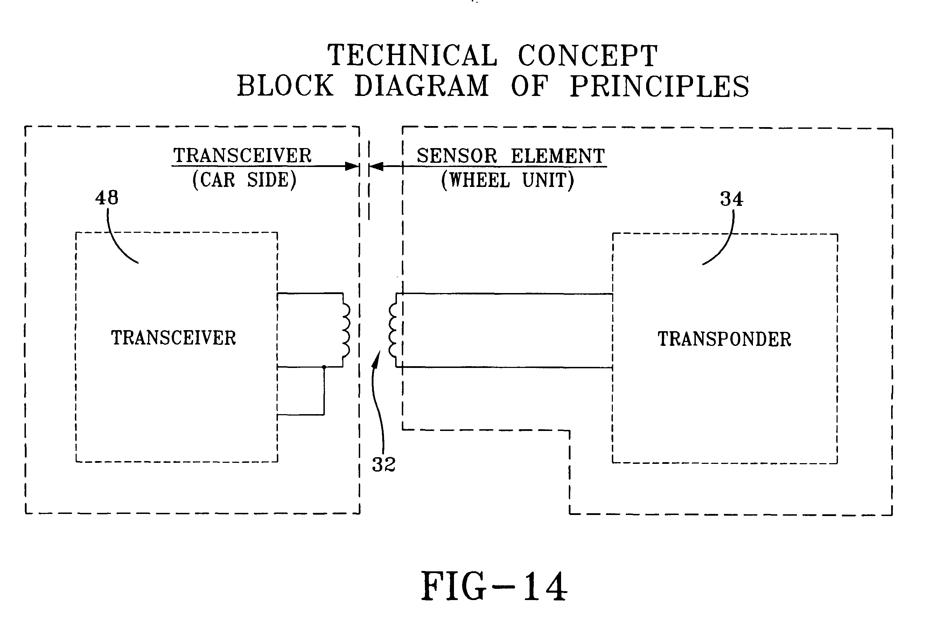

Fig. 14 depicts in schematic form the transceiver, transponder, and antenna system.

From the foregoing, it will be appreciated that the shown embodiment overcomes the deficiencies in known systems and methods for housing a transponder and transformer in an annular tire monitoring system. Pursuant to the shown embodiment, the tag housing is at least partially embedded into a non-conductive carrier strip to form a ring assembly to render the antenna and tag housing unitarily transportable. The carrier strip further acts to protect the integrity of the antenna loop and the transponder components. Such an assembly may be incorporated into a tire during the tire manufacturing process but preferably is attached to the tire by adhesives or other known methods in a post-manufacture attachment procedure. The carrier strip protects the integrity of the antenna wire and transponder encapsulated therein; creates a unitary assembly that may be conveniently transported, inventoried, and deployed to retrofit existing tires with a monitoring system or to replace defective components should the need arise; maintains the antenna in an optimal relationship to the transponder toroidal body through which it extends; and serves to facilitate an optimal orientation of the transponder relative to the tire cavity.

Pursuant to the invention, the tag housing is of stepped elongate profile that provides advantages in the manufacture and assembly of the annular apparatus. The configuration of the tag housing makes the housing self-centering in a mold and provides angular sides that abut against mold block sidewalls to inhibit the flow of carrier strip material into the mold block cavity. The sensor port through the upper surface of the housing snout is thereby maintained in an open and operative condition and potentially damaging contact between carrier strip material and the transponder within the housing compartment is avoided.

## Claims

1. A tag housing for an annular assembly comprising:
- opposed sidewalls (54, 56) and a bottom wall (55) defining an internal chamber (62) therebetween;
- a portal (76) extending through the housing in communications with the internal chamber (62)
- a peripheral flange (78) projecting outward from the periphery of the housing and having an upper flange surface (80);
- first sidewall portions (72) disposed above the flange surface (80) and intersecting the flange upper surface (80) at a given angle;
- upper sidewall convergent portions (81) extending to an upper surface (74) and defining with the upper surface a housing snout (70); and
- the portal (76) extending through the upper surface (74) in communication with the internal chamber (62).

2. A tag housing as set forth in claim 1, wherein the sidewall first portions (72) intersect the upper flange surface (80) at substantially a right angle.

3. A tag housing as set forth in claim 1, wherein a lower portion of the housing (52) has a bore (64) extending there through in communication with the internal chamber (62).

4. A tag housing as set forth in claim 1, wherein the housing includes a carrier strip (36) surrounding a lower portion of the housing (52) and the housing snout (70) projecting free of the carrier strip (36).

5. A tag housing as set forth in claim 4, wherein the housing (52) is embedded within the carrier strip (36) substantially up to the peripheral flange (78).

6. A tag housing as set forth in claim 5, wherein the housing (52) is elongate in a longitudinal direction and wherein the carrier strip (36) maintains the elongate housing in a flat or in an upright position.

7. An annular apparatus comprising:
- an annular carrier strip (36) and a tag housing according to at least one of the previous claims at least partially embedded within the carrier strip (36).

8. A method of manufacturing an annular apparatus comprising an annular antenna (32) coupled to a transponder (34) through a toroidal transformer (82) having a toroidal opening, the method comprising the steps of:
- positioning the transformer (82) and transponder (3) within a tag housing (52), the tag housing (52) having a chamber (62) defined by opposed sidewalls (54, 56) and a bottom wall (55), the tag housing (52) further having a flange projecting (78) outward from the periphery of the housing, upper convergent sidewall portions (81) extending to an upper surface (74), and a sensor port (76) extending through the upper surface (74) in communication with the housing chamber (62);
- positioning the annular antenna (32) and the tag housing (52) within a mold (110) with the housing convergent surfaces located within a mold cavity (112) defined by cavity sidewalls (114);
- positioning an upper surface of the peripheral flange (78) and housing sidewall portions superior to the flange (78) in close abutting relationship with portions of the cavity sidewalls (114); and
- injecting carrier strip material into the mold (110) to at least partially encapsulate the antenna (32) and a lower portion of the tag housing (52).

9. A method according to claim 8, wherein comprising the further step of terminating the induction of carrier strip material into the mold (110) at a level where the carrier strip material reaches the housing flange (78) to allow the convergent housing surfaces to remain free of the carrier strip (36).

10. A method according to claim 8 or 9, further comprising:
- optionally aligning the tag housing (52) into either a flat or an on-end orientation relative to the carrier strip (36).

## Patentansprüche

1. Ein Tag-Gehäuse für eine ringförmige Baugruppe, umfassend:
- gegenüberliegende Seitenwände (54, 56) und eine Bodenwand (55), welche dazwischen eine Innenkammer (62) definieren;
- eine Zugangsöffnung (76), die sich durch das Gehäuse erstreckt, in Kommunikation mit der Innenkammer (62);
- einen Umfangsflansch (78), der vom Umfang des Gehäuses nach außen ragt und eine obere Flanschfläche (80) aufweist;
- erste Seitenwandteile (72), die über der Flanschfläche (80) angeordnet sind und die Flanschoberseite (80) in einem gegebenen Winkel kreuzen;
- konvergierende Teile (81) der oberen Seitenwand, die sich zu einer oberen Fläche (74) erstrecken und mit der Oberseite eine Gehäusetülle (70) definieren; und wobei
- die Zugangsöffnung (76) sich in Kommunikation mit der Innenkammer (62) durch die obere Fläche (74) erstreckt.

2. Ein Tag-Gehäuse, wie in Anspruch 1 ausgeführt, wobei die ersten Seitenwandteile (72) die obere Flanschfläche (80) in im Wesentlichen einem rechten Winkel kreuzen.

3. Ein Tag-Gehäuse, wie in Anspruch 1 ausgeführt, wobei ein unteres Teil des Gehäuses (52) eine Bohrung (64) aufweist, die sich hierdurch erstreckt, in Kommunikation mit der Innenkammer (62).

4. Ein Tag-Gehäuse, wie in Anspruch 1 ausgeführt, wobei das Gehäuse einen Trägerstreifen (36) beinhaltet, der einen unteren Teil des Gehäuses (52) umgibt, und wobei die Gehäusetülle (70) frei von dem Trägerstreifen (36) vorragt.

5. Ein Tag-Gehäuse, wie in Anspruch 4 ausgeführt, wobei das Gehäuse (52) im Wesentlichen bis zu dem Umfangsflansch (78) in den Trägerstreifen (36) eingebettet ist.

6. Ein Tag-Gehäuse, wie in Anspruch 5 ausgeführt, wobei das Gehäuse (52) in einer Längsrichtung langgestreckt ist und wobei der Trägerstreifen (36) das langgestreckte Gehäuse in einer flachen oder in einer aufrechten Position hält.

7. Eine ringförmige Vorrichtung, umfassend:
- einen ringförmigen Trägerstreifen (36) und ein Tag-Gehäuse gemäß zumindest einem der vorangehenden Ansprüche, zumindest teilweise in den Trägerstreifen (36) eingebettet.

8. Ein Verfahren zur Herstellung einer ringförmigen Vorrichtung, die eine ringförmige Antenne (32) umfasst, die durch einen kreisringförmigen Transformator (82), der eine kreisringförmige Öffnung aufweist, an einen Transponder (34) gekoppelt ist, wobei das Verfahren die Schritte umfasst des:
- Positionierens des Transformators (82) und Transponders (3) innerhalb eines Tag-Gehäuses (52), wobei das Tag-Gehäuse (52) eine Kammer (62) aufweist, die durch gegenüberliegende Seitenwände (54, 56) und eine Bodenwand (55) definiert ist, wobei das Tag-Gehäuse (52) weiterhin einen vom Umfang des Gehäuses nach außen vorragenden Flansch (78), obere konvergierende Seitenwandteile (81), die sich zu einer oberen Fläche (74) erstrecken, und eine Sensoröffnung (76), die sich durch die obere Fläche (74) in Kommunikation mit der Gehäusekammer (62) erstreckt, aufweist;
- Positionierens der ringförmigen Antenne (32) und des Tag-Gehäuses (52) in einer Form (110), wobei die konvergierenden Gehäuseflächen sich innerhalb eines durch Hohlraumseitenwände (114) definierten Formenhohlraums (112) befinden; und
- Positionierens einer oberen Fläche des Umfangsflanschs (78) und Gehäuseseitenwandteilen über dem Flansch (78) in dicht anstoßendem Verhältnis mit Teilen der Hohlraumseitenwände (114); und
- Einspritzens von Trägerstreifenmaterial in die Form (110), um die Antenne (32) und einen unteren Teil des Tag-Gehäuses (52) zumindest teilweise einzukapseln.

9. Ein Verfahren gemäß Anspruch 8, wobei es den weiteren Schritt umfasst des Beendigens der Einbringung von Trägerstreifenmaterial in die Form (110) auf einem Niveau, wo das Trägerstreifenmaterial den Gehäuseflansch (78) erreicht, um zu gestatten, dass die konvergierenden Gehäuseflächen frei von dem Trägerstreifen (36) bleiben.

10. Ein Verfahren gemäß Anspruch 8 oder 9, weiter umfassend:
- optionsweises Ausrichten des Tag-Gehäuses (52) in entweder einer flachen oder einer Hochkant-Orientierung in Bezug auf den Trägerstreifen (36).

## Revendications

1. Gaine pour dispositif d'indication destinée à un assemblage annulaire, comprenant :
- des parois latérales opposées (54, 56) et une paroi inférieure (55) définissant une chambre interne (62) entre elles ;
- un portail (76) s'étendant à travers la gaine, en communication avec la chambre interne (62) ;
- une bride périphérique (78) faisant saillie vers l'extérieur par rapport à la périphérie de la gaine et possédant une surface de bride supérieure (80) ;
- des premières portions de parois latérales (72) disposées au-dessus de la surface de bride (80) et coupant la surface supérieure de bride (80) en formant un angle donné ;
- des portions supérieures convergentes de parois latérales (81) s'étendant jusqu'à une surface supérieure (74) et définissant, avec la surface supérieure, un bec de gaine (70) ; et
- le portail (76) s'étendant à travers la surface supérieure (74) en communication avec la chambre interne (62).

2. Gaine pour dispositif d'indication selon la revendication 1, dans laquelle les premières portions de parois latérales (72) coupent la surface de bride supérieure (80) en formant essentiellement un angle droit.

3. Gaine pour dispositif d'indication selon la revendication 1, dans laquelle une portion inférieure de la gaine (52) possède un alésage (64) s'étendant à travers ladite portion, en communication avec la chambre interne (62).

4. Gaine pour dispositif d'indication selon la revendication 1, dans laquelle la gaine englobe une bande de support (36) entourant une portion inférieure de la gaine (52) et le bec de la gaine (70) faisant saillie librement par rapport à la bande de support (36).

5. Gaine pour dispositif d'indication selon la revendication 4, dans laquelle la gaine (52) est encastrée dans la bande de support (36) essentiellement jusqu'à la bride périphérique (78).

6. Gaine pour dispositif d'indication selon la revendication 5, dans laquelle la gaine (52) est allongée en direction longitudinale, et dans laquelle la bande de support (36) maintient la gaine allongée dans une position plate ou dans une position dressée.

7. Appareil annulaire comprenant :
une bande de support annulaire (36) et une gaine pour dispositif d'indication selon au moins une des revendications précédentes, encastrée au moins en partie dans la bande de support (36).

8. Procédé de fabrication d'un appareil annulaire comprenant une antenne annulaire (32) couplée à un transpondeur (34) via un transformateur toroïdal (82) possédant une ouverture toroïdale, le procédé comprenant les étapes consistant à :
- positionner le transformateur (82) et le transpondeur (3) dans une gaine pour dispositif d'indication (52), la gaine pour dispositif d'indication (52) comportant une chambre (62) définie par des parois latérales opposées (54, 56) et par une paroi inférieure (55), la gaine pour dispositif d'indication (52) comprenant en outre une bride (78) faisant saillie vers l'extérieur par rapport à la périphérie de la gaine, des portions supérieures convergentes de parois latérales (81) s'étendant jusqu'à une surface supérieure (74), et un orifice de détection (76) s'étendant à travers la surface supérieure (74) en communication avec la chambre (62) de la gaine ;
- positionner l'antenne annulaire (32) et la gaine pour dispositif d'indication (52) dans un moule (110), les surfaces convergentes de la gaine étant disposées au sein d'une cavité de moule (112) définie par les parois latérales (114) de la cavité ;
- positionner une surface supérieure de la bride périphérique (78) et les portions de parois latérales de la gaine disposées par-dessus la bride (78) en relation d'about étroite avec des portions des parois latérales (114) de la cavité ; et
- injecter une matière de bande de support dans le moule (110) pour encapsuler au moins en partie l'antenne (32) et une portion inférieure de la gaine pour dispositif d'indication (52).

9. Procédé selon la revendication 8, comprenant en outre l'étape supplémentaire consistant à mettre fin à l'injection d'une matière de bande de support dans le moule (110) lorsqu'on parvient à un niveau auquel la matière de bande de support atteint la bride de la gaine (78), pour permettre aux surfaces convergentes de la gaine de rester à l'écart de la bande de support (36).

10. Procédé selon la revendication 8 ou 9, comprenant en outre le fait de :
- le cas échéant, disposer la gaine pour dispositif d'indication (52) dans une orientation soit plate, soit dressée par rapport à la bande de support (36).
